# EUROPÄISCHE PATENTSCHRIFT

(11) **EP 4 018 083 B1**
(45) Veröffentlichungstag und Bekanntmachung des Hinweises auf die Patenterteilung: **06.09.2023**
(21) Anmeldenummer: 20743627.0
(22) Anmeldetag: 15.07.2020
(51) Int. Cl.: F01M 13/04, B01D 45/14, B04B 5/12, B04B 9/02, B04B 9/10

(54) **VERFAHREN ZUM BETREIBEN EINES AKTIVEN ÖLABSCHEIDERS UND VORRICHTUNG ZUM ABSCHEIDEN VON ÖL**
METHOD FOR OPERATING AN ACTIVE OIL SEPARATOR AND DEVICE FOR SEPARATING OIL
PROCÉDÉ DE FONCTIONNEMENT D'UN SÉPARATEUR D'HUILE ACTIF ET DISPOSITIF DE SÉPARATION D'HUILE

(30) Priorität: 19.08.2019 DE 102019212394
(43) Veröffentlichungstag der Anmeldung: 29.06.2022
(73) Patentinhaber: Volkswagen Aktiengesellschaft, 38440 Wolfsburg (DE)
(72) Erfinder: BIRNBAUM, Sven, 38477 Jembke (DE); WACHTENDORF, Axel, 38108 Braunschweig (DE)
(86) Internationale Anmeldenummer: PCT/EP2020/070063
(87) Internationale Veröffentlichungsnummer: WO 2021/032371

(56) Entgegenhaltungen:
- DE-A1-102017 111 479
- US-A1- 2003 233 932
- US-A1- 2011 180 052
- US-A1- 2013 233 290

## Beschreibung

Bei Kraftfahrzeugen mit Verbrennungsmotor können Gase aufgrund des Verbrennungsprozesses sowie hoher Drücke an der Kontaktstelle zwischen dem Kolbenring und der Laufbuchse des Zylinders in das Kurbelgehäuse entweichen. Diese Gase werden daher auch als "Blow-by-Gase" oder "BB-Gase" bezeichnet. Im Rahmen der Erfindung werden die BB-Gase als "Abluft" bezeichnet. Im Betrieb des Verbrennungsmotors sammelt sich die BB-Gase im Kurbelgehäuse und müssen daher aus dem Kurbelgehäuse evakuiert werden. Dies erfolgt über entsprechend ausgebildete Entlüftungsleitungen. Die evakuierten BB-Gase können anschließend mit Frischluft vermischt und für den Verbrennungsprozess den Zylindern wieder zugeführt werden. Eine Zuleitung der BB-Gase zu der Verbrennungsluft erfolgt beispielsweise direkt in das Saugrohr oder in den Verdichter.

Problematisch hierbei ist, dass BB-Gase neben den üblichen Verbrennungsgasen oftmals auch Anreicherungen von Kraftstoffresten, Wasser und Öl aufweisen. Insbesondere der Anteil an Öl im BB-Gas kann bei einer Verbrennung im Zylinder zu Problemen führen. Das Öl liegt in Form winziger Öltropfen im BB-Gas vor. Im Verbrennungsprozess bewirken diese Öltropfen die Entstehung von HC-Emissionen und Feinstaub, insbesondere Asche. Zudem tragen die Öltropfen zu einer Verkokung der Einlassventile des Verbrennungsmotors bei, sodass der Verschleiß der Einlassventile erhöht wird.

Zur Vermeidung dieser Nachteile werden Ölabscheider verwendet, welche einen Abschnitt der Entlüftungsleitung bilden. Aus dem Kurbelgehäuse geleitetes BB-Gas wird in den Ölabscheider geleitet und das Öl über eine Filtervorrichtung des Ölabscheiders aus dem BB-Gas abgeschieden. Bekannte Filtervorrichtungen zum Abscheiden von Öl weisen beispielsweise Teller auf, welche oftmals zu Tellerpaketen zusammengefasst sind. Die auf die Teller treffenden Öltropfen können an den Tellern anhaften und unter Bildung größerer Tropfen gesammelt werden. Das somit aus dem BB-Gas abgeschiedene Öl kann beispielsweise wieder zurück ins Kurbelgehäuse geleitet werden. Die Ölabscheidung mittels derartiger Ölabscheider nimmt eine wichtige Funktion in der Abgasminderung sowie der Motorschonung ein.

Konventionelle Ölabscheider weisen zumeist ein starres oder ein passives Filtersystem auf. Unter einem starren Filtersystem wird ein Filtersystem verstanden, bei welchem die Filtervorrichtung relativ zur Entlüftungsleitung starr ausgebildet ist, sodass im Betrieb keine Relativbewegungen zur Entlüftungsleitung erfolgt. Derartige Filtersysteme weisen beispielsweise feststehende Filterplatten auf, welche unter einem vordefinierten Anströmwinkel vom BB-Gas anströmbar sind, um die Öltropfen an den Filterplatten abzuscheiden. Bei passiven Filtersystemen sind die Filtervorrichtungen beweglich, insbesondere rotierbar, ausgebildet, wobei das passive Filtersystem keine eigene Antriebsvorrichtung aufweist. Das Antreiben der Filtervorrichtung kann beispielsweise durch den Gasstrom des BB-Gases, einen Schmiermittelstrom eines Schmiermittels oder dergleichen erfolgen. Ein derartiges Filtersystem ist beispielsweise aus der DE 10 2013 226 610 A1 bekannt.

Durch fortlaufende Verschärfungen der gesetzlich vorgeschriebenen Grenzwerte für Emissionen, wie beispielsweise durch die SULEV 20 Gesetzgebung, sind unter anderem auch die Anforderungen an die Ölabscheidung gattungsgemäßer Kurbelgehäuseentlüftungen gestiegen. Konventionelle starre oder passive Filtersysteme werden diesen Anforderungen nicht gerecht, da diese systembedingt keine ausreichende Ölabscheidung gewährleisten können. Mit anderen Worten kann mit diesen Filtersystemen nicht sichergestellt werden, dass der Ölgehalt des gefilterten BB-Gases einen maximal zulässigen Grenzwert nicht übersteigt. Aus diesem Grund werden zunehmend Ölabscheider mit aktiven Filtersystemen verwendet.

Bei einem aktiven Filtersystem werden die Filtervorrichtungen von einem eigenen, insbesondere separat vom Betriebszustand des Verbrennungsmotors ansteuerbaren Elektromotor angetrieben, insbesondere in Rotation versetzt. Eine verbreitete Ausführungsform eines aktiven Filtersystems ist der Tellerseparator. Tellerseparatoren weisen oftmals ein Tellerpaket aus Tellern mit nach unten abgewinkeltem Randbereich auf, welche axial voneinander beabstandet an einer gemeinsamen Rotationswelle gehalten sind. Die Rotationswelle durchdringt die Teller im Flächenmittelpunkt des jeweiligen Tellers und wird mittels eines Elektromotors angetrieben.

Die Drehzahl der Rotationswelle kann beispielsweise in Abhängigkeit eines Betriebszustands des Verbrennungsmotors, insbesondere in Abhängigkeit eines Innendrucks im Kurbelgehäuse, gesteuert werden. Im Betrieb wird das BB-Gas von unten gegen das Tellerpaket geleitet. Um eine Anströmung auf eine möglichst große Tellerfläche zu ermöglichen, weisen der untere sowie die mittleren Teller Gasdurchführungen auf. Somit kann das BB-Gas durch das Tellerpaket emporsteigen. Durch die Zentrifugalkraft der rotierenden Teller wird das Gas von der Rotationswelle weggetrieben. Aufgrund der Massenträgheit der Öltropfen sammeln sich diese an dem seitlichen abgewinkelten Randbereich der Teller an und werden weiter nach außen getrieben. Hierbei verbinden sich die kleinen Öltropfen zu größeren Öltropfen. Auf diese Weise können auch winzige Öltropfen aus dem BB-Gas gefiltert werden. Die an den Seitenrand der Teller gelangenden Öltropfen werden gegen eine Prallwand geschleudert und laufen an dieser aufgrund der Schwerkraft nach unten in einen Auffangbehälter oder zurück in das Kurbelgehäuse. Das auf diese Weise von Öl gereinigte BB-Gas strömt an der Prallwand vorbei und kann der Zuluft des Verbrennungsmotors wieder beigemischt werden. Ein solches aktives Filtersystem ist beispielsweise aus der DE 10 2015 205 557 B4 bekannt. Aus den Dokumenten US 2013/233 290 A1, DE 10 2017 111 479 A1, US 2003/233 932 A1 und
US 2011 / 180 052 A1 sind verschiedene Vorrichtungen und Verfahren zum Reinigen von Luft bekannt.

Derartige Filtersysteme haben den Nachteil, dass die Drehzahl der Filtervorrichtung nicht oder nur unzureichend unter Berücksichtigung einer Filterleistung sowie einer Stromaufnahme des Elektromotors optimiert ist. Grundsätzlich gilt, dass die Filterleistung des aktiven Filtersystems mit steigender Drehzahl ebenfalls steigt. Gleichzeitig bedeutet eine steigende Drehzahl auch eine steigende Stromaufnahme des Elektromotors. Bei herkömmlichen aktive Filtersystemen ist die Drehzahl allenfalls an den Innendruck des Kurbelgehäuses gekoppelt, sodass das Filtersystem im Betrieb des Verbrennungsmotors oftmals eine zu hohe Filterleistung bereitstellt und somit einen zu hohen Stromverbrauch aufweist. Ein zu hoher Stromverbrauch kann das Bordnetz sowie die Batterie des Kraftfahrzeugs übermäßig belasten und reduziert zudem die Wirtschaftlichkeit des Kraftfahrzeugs.

Es ist daher Aufgabe der vorliegenden Erfindung, die voranstehend beschriebenen Nachteile bei einem aktiven Ölabscheider zu beheben oder zumindest teilweise zu beheben. Insbesondere ist es Aufgabe der vorliegenden Erfindung ein Verfahren zum Betreiben eines aktiven Ölabscheiders und einer Vorrichtung zum Abscheiden von Öl aus Abluft eines Kurbelgehäuses eines Kraftfahrzeugs mit einem Verbrennungsmotor zu schaffen, die auf eine einfache und kostengünstige Art und Weise einen übermäßigen Stromverbrauch vermeiden und dabei ein zuverlässiges Abscheiden von Öl zu gewährleisten.

Voranstehende Aufgabe wird durch die Patentansprüche gelöst. Demnach wird die Aufgabe durch ein Verfahren zum Betreiben eines aktiven Ölabscheiders zum Abscheiden von Öl aus Abluft eines Kurbelgehäuses eines Kraftfahrzeugs mit einem Verbrennungsmotor mit den Merkmalen des unabhängigen Anspruchs 1 sowie durch eine Vorrichtung zum Abscheiden von Öl aus Abluft eines Kurbelgehäuses eines Kraftfahrzeugs mit Verbrennungsmotor mit den Merkmalen des nebengeordneten Anspruchs 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Betreiben eines aktiven Ölabscheiders zum Abscheiden von Öl aus Abluft eines Kurbelgehäuses eines Kraftfahrzeugs mit Verbrennungsmotor gelöst. Das Verfahren weist die folgenden Schritte auf:
- Ermitteln eines Motorbetriebszustands des Verbrennungsmotors mittels einer Ermittlungsvorrichtung, wobei der Motorbetriebszustand durch eine Motorlast und/oder eine Motordrehzahl des Verbrennungsmotors bestimmt ist,
- Bestimmen einer ersten SOLL-Drehzahl des Ölabscheiders in Abhängigkeit des ermittelten Motorbetriebszustands und eines ersten Kennfelds mittels einer Bestimmungsvorrichtung, wobei das erste Kennfeld die erste SOLL-Drehzahl des Ölabscheiders in Abhängigkeit des Motorbetriebszustands festlegt,
- Bestimmen einer maximalen SOLL-Drehzahl des Ölabscheiders in Abhängigkeit der ersten SOLL-Drehzahl mittels der Bestimmungsvorrichtung derart, dass die maximale SOLL-Drehzahl mindestens so hoch wie die erste SOLL-Drehzahl ist,
- Bestimmen einer bevorzugten SOLL-Drehzahl auf Basis der maximalen SOLL-Drehzahl mittels der Bestimmungsvorrichtung derart, dass die bevorzugte SOLL-Drehzahl höchstens so groß wie die maximale SOLL-Drehzahl ist, und
- Steuern eines Elektromotors zum Antreiben des Ölabscheiders mit der bevorzugten SOLL-Drehzahl mittels einer Steuerungsvorrichtung.

Mittels der Ermittlungsvorrichtung wird eine Öltemperatur des Verbrennungsmotors ermittelt, wobei eine zweite SOLL-Drehzahl des Ölabscheiders in Abhängigkeit der ermittelten Öltemperatur und eines zweiten Kennfelds mittels der Bestimmungsvorrichtung bestimmt wird. Das zweite Kennfeld legt die zweite SOLL-Drehzahl des Ölabscheiders in Abhängigkeit der Öltemperatur fest. Hierbei erfolgt das Bestimmen der maximalen SOLL-Drehzahl des Ölabscheiders mittels der Bestimmungsvorrichtung zusätzlich in Abhängigkeit der zweiten SOLL-Drehzahl derart, dass die maximale SOLL-Drehzahl mindestens so hoch wie die zweite SOLL-Drehzahl ist.

Im Rahmen der Erfindung wird der Einfachheit davon ausgegangen, dass das Drehzahlverhältnis zwischen dem Elektromotor und dem Ölabscheider 1:1 beträgt, sodass es dahingestellt werden kann, ob die SOLL-Drehzahl für den Ölabscheider oder den Elektromotor mittels des Kennfelds bestimmt wird.

Zunächst wird der Motorbetriebszustand des Verbrennungsmotors mittels der Ermittlungsvorrichtung ermittelt. Der Motorbetriebszustand ist erfindungsgemäß durch die Motorlast und/oder die Motordrehzahl bestimmt. Demnach wird mittels der Ermittlungsvorrichtung vorzugsweise die aktuelle Motorlast und/oder die aktuelle Motordrehzahl ermittelt. Es kann im Rahmen der Erfindung vorgesehen sein, dass als Motorbetriebszustand eine aktuelle Motorleistung ermittelt wird. Der Motorbetriebszustand kann beispielsweise durch Bestimmen eines gewählten Gangs eines Getriebes des Kraftfahrzeugs, das Abfragen hierfür ausgebildeter Sensoren, insbesondere Drehzahlsensoren, Bestimmen einer Kraftstoffeinspritzmenge oder dergleichen, ermittelt werden. Das Bestimmen des Motorbetriebszustands erfolgt vorzugsweise kontinuierlich oder zumindest fortlaufend wiederholt, um stets eine möglichst aktuell relevante bevorzugte SOLL-Drehzahl des Ölabscheiders ermitteln zu können.

Anschließend wird die erste SOLL-Drehzahl des Ölabscheiders mittels der Bestimmungsvorrichtung in Abhängigkeit des ermittelten Motorbetriebszustands und des ersten Kennfelds bestimmt. Das erste Kennfeld basiert vorzugsweise auf Versuchsreihen und beschreibt für eine Vielzahl von Motorbetriebszuständen die jeweils zu wählende erste SOLL-Drehzahl des Ölabscheiders, um ein ausreichendes Abscheiden des Öls aus der Abluft des Kurbelgehäuses sowie einen möglichst sparsamen Betrieb des Elektromotors sicherzustellen. Das Bestimmen er ersten SOLL-Drehzahl erfolgt vorzugsweise kontinuierlich oder zumindest fortlaufend wiederholt, um stets eine möglichst aktuell relevante bevorzugte SOLL-Drehzahl ermitteln zu können.

Basierend auf der ersten SOLL-Drehzahl und für die Bestimmung der maximalen SOLL-Drehzahl möglichen weiteren SOLL-Drehzahlen wird mittels der Bestimmungsvorrichtung die maximale SOLL-Drehzahl des Ölabscheiders bestimmt. Für den Fall, dass hierbei lediglich die erste SOLL-Drehzahl verwendet wird, entspricht die maximale SOLL-Drehzahl vorzugsweise der ersten SOLL-Drehzahl. Werden in diesem Rahmen weitere SOLL-Drehzahlen berücksichtigt, entspricht die maximale SOLL-Drehzahl vorzugsweise der höchsten hierbei berücksichtigten SOLL-Drehzahl. Das Bestimmen der maximalen SOLL-Drehzahl erfolgt vorzugsweise kontinuierlich oder zumindest fortlaufend wiederholt, um stets eine möglichst aktuell relevante bevorzugte SOLL-Drehzahl ermitteln zu können.

Schließlich wird auf Basis der maximalen SOLL-Drehzahl die bevorzugte SOLL-Drehzahl des Ölabscheiders mittels der Bestimmungsvorrichtung bestimmt. Für den Fall dass hierbei keine weiteren SOLL-Drehzahlen berücksichtigt werden sollen, entspricht die bevorzugte SOLL-Drehzahl vorzugsweise der maximalen SOLL-Drehzahl. Für den Fall, dass hierbei zusätzlich eine minimale SOLL-Drehzahl berücksichtigt werden soll, ist die bevorzugte SOLL-Drehzahl höchstens so groß wie die minimale SOLL-Drehzahl und ist dabei vorzugsweise möglichst nah an der maximalen SOLL-Drehzahl. Das Bestimmen der bevorzugten SOLL-Drehzahl erfolgt vorzugsweise kontinuierlich oder zumindest fortlaufend wiederholt, um stets eine möglichst aktuell relevante bevorzugte SOLL-Drehzahl zum Steuern des Elektromotors verwenden zu können.

Im einfachsten Fall des Verfahrens, in welchem lediglich der Motorbetriebszustand ermittelt wird, wird die bevorzugte SOLL-Drehzahl vorzugsweise derart bestimmt, dass die bevorzugte SOLL-Drehzahl der ersten SOLL-Drehzahl entspricht. In diesem Fall wird die bevorzugte SOLL-Drehzahl vorzugsweise direkt aus dem Kennfeld unter Berücksichtigung des Motorbetriebszustands bestimmt.

Schließlich wird der Elektromotor zum Antreiben des Ölabscheiders mittels der Steuerungsvorrichtung mit der bevorzugten SOLL-Drehzahl gesteuert. Als Elektromotor wird vorzugsweise ein EC-Motor verwendet, welcher über Pulsweitenmodulation angesteuert wird. Das Steuern wird vorzugsweise kontinuierlich oder zumindest fortlaufend wiederholt an veränderte bevorzugte SOLL-Drehzahlen angepasst, um einen möglichst effizienten sowie wirtschaftlichen Betrieb des aktiven Ölabscheiders zu gewährleisten.

Überdies wird mittels der Ermittlungsvorrichtung die Öltemperatur des Verbrennungsmotors ermittelt, wobei die zweite SOLL-Drehzahl des Ölabscheiders in Abhängigkeit der ermittelten Öltemperatur und eines zweiten Kennfelds mittels der Bestimmungsvorrichtung bestimmt wird. Das zweite Kennfeld legt die zweite SOLL-Drehzahl des Ölabscheiders in Abhängigkeit der Öltemperatur fest. Hierbei erfolgt das Bestimmen der maximalen SOLL-Drehzahl des Ölabscheiders mittels der Bestimmungsvorrichtung zusätzlich in Abhängigkeit der zweiten SOLL-Drehzahl derart, dass die maximale SOLL-Drehzahl mindestens so hoch wie die zweite SOLL-Drehzahl ist. Demnach ist die maximale SOLL-Drehzahl mindestens so hoch wie die erste SOLL-Drehzahl und mindestens so hoch wie die zweite SOLL-Drehzahl. Mit anderen Worten ist die maximale SOLL-Drehzahl mindestens das Maximum aus der ersten SOLL-Drehzahl und der zweiten SOLL-Drehzahl. Für den Fall dass hierbei keine weiteren SOLL-Drehzahlen berücksichtigt werden sollen, entspricht die maximale SOLL-Drehzahl vorzugsweise dem Maximum aus der ersten SOLL-Drehzahl und der zweiten SOLL-Drehzahl. Das Bestimmen der zweiten SOLL-Drehzahl erfolgt vorzugsweise kontinuierlich oder zumindest fortlaufend wiederholt, um stets eine möglichst aktuell relevante bevorzugte SOLL-Drehzahl ermitteln zu können. Die Öltemperatur entscheidet maßgeblich über die Viskosität des Öls und damit über die Fließeigenschaften sowie die Öltropfengröße des Öls. Die Öltropfen werden zu hohen Öltemperaturen hin kleiner. Zum Herausfiltern kleinerer Öltropfen muss die Drehzahl des Ölabscheiders erhöht werden, um die Separierleistung konstant zu halten. Eine Berücksichtigung der Öltemperatur hat den Vorteil, dass eine Steuerung des Elektromotors mit einfachen Mitteln sowie auf eine kostengünstige Art und Weise bedarfsgerechter sowie wirtschaftlicher durchgeführt wird.

Ein erfindungsgemäßes Verfahren zum Betreiben eines aktiven Ölabscheiders zum Abscheiden von Öl aus Abluft eines Kurbelgehäuses eines Kraftfahrzeugs mit einem Verbrennungsmotor hat gegenüber herkömmlichen Verfahren den Vorteil, dass mit einfachen Mitteln sowie auf eine kostengünstige Art und Weise ein effizienter sowie wirtschaftlicher Betrieb des Ölabscheiders gewährleistet ist. Mit dem erfindungsgemäßen Verfahren wird nur so viel Öl wie nötig abgeschieden und dabei der Elektromotor zum Antreiben des Ölabscheiders möglichst sparsam betrieben. Hierdurch ist ein Energieverbrauch des Kraftfahrzeugs weiter reduzierbar, ohne dass eine Verschlechterung des Filterresultats des Ölabscheiders in Kauf genommen werden muss, sodass auch strenge gesetzliche Vorschriften weiterhin eingehalten werden.

Gemäß einer bevorzugten Weiterentwicklung der Erfindung kann bei einem Verfahren vorgesehen sein, dass der Motorbetriebszustand mittels der Ermittlungsvorrichtung von einem Motorsteuerungsgerät zum Steuern des Verbrennungsmotors ermittelt wird. Mittels des Motorsteuerungsgeräts wird der Verbrennungsmotor gesteuert. Somit sind den Motorbetriebszustand bestimmende Parameter, wie Beispielsweise Motorlast und Motordrehzahl, im Motorsteuerungsgerät vorhanden und mittels der Ermittlungsvorrichtung leicht auslesbar. Das direkte Auslesen der Parameter hat den Vorteilen, dass mit einfachen Mitteln sowie auf eine kostengünstige Art und Weise der Motorbetriebszustand ermittelbar ist. Zusätzliche Sensoren sind nicht mehr erforderlich. Zudem ist eine notwendige Rechenleistung der Ermittlungsvorrichtung auf diese Weise deutlich reduzierbar.

Weiter bevorzugt wird mittels der Ermittlungsvorrichtung ein Öldruck des Verbrennungsmotors ermittelt, wobei eine dritte SOLL-Drehzahl des Ölabscheiders in Abhängigkeit des ermittelten Öldrucks und eines dritten Kennfelds mittels der Bestimmungsvorrichtung bestimmt wird. Das dritte Kennfeld legt die dritte SOLL-Drehzahl des Ölabscheiders in Abhängigkeit des Öldrucks fest. Hierbei erfolgt das Bestimmen der maximalen SOLL-Drehzahl des Ölabscheiders mittels der Bestimmungsvorrichtung zusätzlich in Abhängigkeit der dritten SOLL-Drehzahl derart, dass die maximale SOLL-Drehzahl mindestens so hoch wie die dritte SOLL-Drehzahl ist. Demnach ist die maximale SOLL-Drehzahl mindestens so hoch wie die erste SOLL-Drehzahl und mindestens so hoch wie die dritte SOLL-Drehzahl. Mit anderen Worten ist die maximale SOLL-Drehzahl mindestens das Maximum aus der ersten SOLL-Drehzahl und der dritten SOLL-Drehzahl. Für den Fall dass hierbei keine weiteren SOLL-Drehzahlen berücksichtigt werden sollen, entspricht die maximale SOLL-Drehzahl vorzugsweise dem Maximum aus der ersten SOLL-Drehzahl und der dritten SOLL-Drehzahl. Das Bestimmen der dritten SOLL-Drehzahl erfolgt vorzugsweise kontinuierlich oder zumindest fortlaufend wiederholt, um stets eine möglichst aktuell relevante bevorzugte SOLL-Drehzahl ermitteln zu können. Der Öldruck beeinflusst einen Ölfluss über Ölspritzdüsen zur Kolbenkühlung, die Öltropfengröße sowie eine Ölströmung im Kurbelgehäuse. Somit ist aus dem Öldruck eine notwendige Separierleistung des Ölabscheiders ableitbar. Mit steigendem Öldruck muss die Drehzahl des Ölabscheiders erhöht werden, um die Separierleistung konstant zu halten. Eine Berücksichtigung des Öldrucks hat den Vorteil, dass eine Steuerung des Elektromotors mit einfachen Mitteln sowie auf eine kostengünstige Art und Weise bedarfsgerechter sowie wirtschaftlicher durchgeführt wird.

In einer besonders bevorzugten Ausgestaltung der Erfindung kann bei einem Verfahren vorgesehen sein, dass mittels der Ermittlungsvorrichtung eine Bordnetzspannung eines Bordnetzes zum Betreiben des Elektromotors ermittelt wird, wobei eine vierte SOLL-Drehzahl des Ölabscheiders in Abhängigkeit der ermittelten Bordnetzspannung und eines vierten Kennfelds mittels der Bestimmungsvorrichtung bestimmt wird. Das vierte Kennfeld legt die vierte SOLL-Drehzahl des Ölabscheiders in Abhängigkeit der Bordnetzspannung fest. Hierbei erfolgt das Bestimmen der minimalen SOLL-Drehzahl in Abhängigkeit der vierten SOLL-Drehzahl mittels der Bestimmungsvorrichtung derart, dass die minimale SOLL-Drehzahl maximal so groß wie die vierte SOLL-Drehzahl ist. Zudem erfolgt das Bestimmen der bevorzugten SOLL-Drehzahl des Ölabscheiders mittels der Bestimmungsvorrichtung zusätzlich in Abhängigkeit der minimalen SOLL-Drehzahl derart, dass die bevorzugte SOLL-Drehzahl höchstens so hoch wie die minimale SOLL-Drehzahl ist. Für den Fall dass hierbei keine weiteren SOLL-Drehzahlen berücksichtigt werden sollen, entspricht die minimale SOLL-Drehzahl vorzugsweise der vierten SOLL-Drehzahl. Werden in diesem Rahmen weitere SOLL-Drehzahlen berücksichtigt, entspricht die minimale SOLL-Drehzahl vorzugsweise der niedrigsten hierbei berücksichtigten SOLL-Drehzahl. Das Bestimmen der minimalen SOLL-Drehzahl erfolgt vorzugsweise kontinuierlich oder zumindest fortlaufend wiederholt, um stets eine möglichst aktuell relevante bevorzugte SOLL-Drehzahl ermitteln zu können. Bei einer relativ niedrigen Bordnetzspannung kann es von Vorteil sein, eine Antriebsleistung des Elektromotors zum Antreiben des Ölabscheiders zu reduzieren, um eine Überlastung des Bordnetzes zu vermeiden. Eine Berücksichtigung der Bordnetzspannung hat daher den Vorteil, dass mit einfachen Mitteln sowie auf eine Kostengünstige Art und Weise der Ölabscheider derart betreibbar ist, dass eine Überlastung des Bordnetzes vermieden wird.

Weiter bevorzugt wird mittels der Ermittlungsvorrichtung ein Wassergehalt im Öl ermittelt, wobei eine fünfte SOLL-Drehzahl des Ölabscheiders in Abhängigkeit des ermittelten Wassergehalts und eines fünften Kennfelds mittels der Bestimmungsvorrichtung bestimmt wird. Das fünfte Kennfeld legt die fünfte SOLL-Drehzahl des Ölabscheiders in Abhängigkeit des Wassergehalts fest. Hierbei erfolgt das Bestimmen der minimalen SOLL-Drehzahl zusätzlich in Abhängigkeit der fünften SOLL-Drehzahl mittels der Bestimmungsvorrichtung derart, dass die minimale SOLL-Drehzahl maximal so groß wie die fünfte SOLL-Drehzahl ist. Für den Fall dass hierbei keine weiteren SOLL-Drehzahlen berücksichtigt werden sollen, entspricht die minimale SOLL-Drehzahl vorzugsweise dem Minimum aus der vierten SOLL-Drehzahl und der fünften SOLL-Drehzahl. Werden in diesem Rahmen weitere SOLL-Drehzahlen berücksichtigt, entspricht die minimale SOLL-Drehzahl vorzugsweise der niedrigsten hierbei berücksichtigten SOLL-Drehzahl. Das Bestimmen der minimalen SOLL-Drehzahl erfolgt vorzugsweise kontinuierlich oder zumindest fortlaufend wiederholt, um stets eine möglichst aktuell relevante bevorzugte SOLL-Drehzahl ermitteln zu können. Bei hohen Wassermengen im Öl ist eine Maximalbegrenzung notwendig. Das Austragen von Wassermengen soll durch eine verminderte Separierung durch den Ölabscheider begünstigt werden. Beim Abwägen der Vor- und Nachteile hat der Wasseraustrag Vorrang gegenüber der Ölseparierung. Eine hohe Separierleistung würde dazu führen, dass sich Teile des Wassers wieder verflüssigen und in das Kurbelgehäuse zurückgeführt werden. Eine Berücksichtigung des Wassergehalts hat daher den Vorteil, dass mit einfachen Mitteln sowie auf eine Kostengünstige Art und Weise der Ölabscheider derart betreibbar ist, dass eine Wasserabfuhr verbessert ist.

Vorzugsweise wird mittels der Ermittlungsvorrichtung ein Kraftstoffgehalt im Öl ermittelt, wobei eine sechste SOLL-Drehzahl des Ölabscheiders in Abhängigkeit des ermittelten Wassergehalts und eines sechsten Kennfelds mittels der Bestimmungsvorrichtung bestimmt wird. Das sechste Kennfeld legt die sechste SOLL-Drehzahl des Ölabscheiders in Abhängigkeit des Kraftstoffgehalts fest. Hierbei erfolgt das Bestimmen der minimalen SOLL-Drehzahl mittels der Bestimmungsvorrichtung zusätzlich in Abhängigkeit der sechsten SOLL-Drehzahl derart, dass die minimale SOLL-Drehzahl maximal so groß wie die sechste SOLL-Drehzahl ist. Für den Fall dass hierbei keine weiteren SOLL-Drehzahlen berücksichtigt werden sollen, entspricht die minimale SOLL-Drehzahl vorzugsweise dem Minimum aus der vierten SOLL-Drehzahl und der sechsten SOLL-Drehzahl. Werden in diesem Rahmen weitere SOLL-Drehzahlen berücksichtigt, entspricht die minimale SOLL-Drehzahl vorzugsweise der niedrigsten hierbei berücksichtigten SOLL-Drehzahl. Das Bestimmen der minimalen SOLL-Drehzahl erfolgt vorzugsweise kontinuierlich oder zumindest fortlaufend wiederholt, um stets eine möglichst aktuell relevante bevorzugte SOLL-Drehzahl ermitteln zu können. Bei hohen Kraftstoffmengen im Öl ist eine Maximalbegrenzung notwendig. Das Austragen von Kraftstoffmengen soll durch eine verminderte Separierung mittels des Ölabscheiders begünstigt werden. Beim Abwägen der Vor- und Nachteile hat der Kraftstoffaustrag Vorrang gegenüber der Ölseparierung. Eine hohe Separierleistung würde dazu führen, dass sich Teile des Kraftstoffes wieder verflüssigen und in das Kurbelgehäuse zurückgeführt werden. Eine Berücksichtigung des Kraftstoffgehalts hat daher den Vorteil, dass mit einfachen Mitteln sowie auf eine Kostengünstige Art und Weise der Ölabscheider derart betreibbar ist, dass eine Kraftstoffabfuhr aus dem BB-Gas verbessert ist.

Gemäß einer bevorzugten Ausführungsform der Erfindung wird das Verfahren wiederholt durchgeführt, wobei die bevorzugte SOLL-Drehzahl mittels eine Hysterese nur dann verändert wird, wenn die Veränderung eine durch die Hysterese festgelegte Mindestveränderung übersteigt. Dies hat den Vorteil, dass die Drehzahl des Ölabscheiders nicht bei jeder kleinen Änderung der Einflussparameter, wie beispielsweise Motorlast, Motordrehzahl, Öltemperatur, Öldruck oder dergleichen, geändert werden muss. Ein ständiges Beschleunigen sowie Abbremsen des Elektromotors ist somit mit einfachen Mitteln sowie auf eine kostengünstige Art und Weise vermeidbar. Ein negativer Einfluss des Nachlaufs des Elektromotors aufgrund der Massenträgheit des Rotors ist auf diese Weise reduzierbar.

Besonders bevorzugt erfolgt das Steuern des Elektromotors zum Antreiben des Ölabscheiders mit der bevorzugten SOLL-Drehzahl mittels der Steuerungsvorrichtung mit einem begrenzten Gradienten derart, dass eine Stromstärke zum Betreiben des Elektromotors einen vordefinierten Stromstärkengrenzwert nicht übersteigt. Dies kann auch als Gradientenbegrenzung bezeichnet werden. Durch die Gradientenbegrenzung wird die Dynamik der Drehzahl des Elektromotors gemindert. Die Gradientenbegrenzung soll grundsätzlich unterscheiden, ob die bevorzugte SOLL-Drehzahl ansteigt oder abfällt. Es sind vorzugsweise für beide Fälle jeweils ein Applikationsparameter für die Gradientenbegrenzung vorzusehen. Je höher der Gradient, desto höher ist die dazu notwendige Stromstärke. Mit dem Maß der Gradientenbegrenzung ist demnach mit einfachen Mitteln sowie auf eine kostengünstige Art und Weise die Stromstärke bei einer Drehzahländerung einstellbar bzw. begrenzbar. Hierdurch ist insbesondere eine Überlastung des Bordnetzes und/oder des Elektromotors vermeidbar.

Gemäß einem zweiten Aspekt der Erfindung wird die Aufgabe durch eine Vorrichtung zum Abscheiden von Öl aus Abluft eines Kurbelgehäuses eines Kraftfahrzeugs mit Verbrennungsmotor gelöst. Die Vorrichtung weist einen aktiven Ölabscheider mit einem Elektromotor zum Antreiben des aktiven Ölabscheiders, eine Ermittlungsvorrichtung zum Ermitteln von Betriebsparametern des Kraftfahrzeugs, eine Bestimmungsvorrichtung zum Bestimmen von SOLL-Drehzahlen des Elektromotors in Abhängigkeit mindestens eines Betriebsparameters und mindestens eines Kennfelds sowie eine Steuerungsvorrichtung zum Steuern des Elektromotors in Abhängigkeit einer bevorzugten SOLL-Drehzahl auf. Erfindungsgemäß ist die Vorrichtung zur Durchführung eines erfindungsgemäßen Verfahrens nach dem ersten Aspekt der Erfindung ausgebildet.

Der Ölabscheider ist vorzugsweise als Tellerseparator ausgebildet und weist vorzugsweise eine rotierbar gelagerte Welle mit einer Wellenlängsachse auf, an welcher ein Tellerpaket mit mehreren entlang der Wellenlängsachse voneinander beabstandeten Tellern auf. Die Welle ist vorzugsweise senkrecht oder zumindest im Wesentlichen senkrecht angeordnet und verläuft vorzugsweise durch die Massenschwerpunkte der Teller. Die Teller weisen vorzugsweise einen nach unten abgewinkelten Randbereich sowie Durchlasskanäle zum Durchlassen des BB-Gases auf. Der oberste Teller des Tellerpakets weist vorzugsweise keine Durchlasskanäle auf. Den Randbereichen der Teller benachbart weist der Ölabscheider vorzugsweise eine insbesondere umlaufende Prallwand zum Auffangen der separierten Öltropfen auf. Die Prallwand ist vorzugsweise senkrecht bzw. zumindest im Wesentlichen senkrecht angeordnet. Weiter bevorzugt weist der Ölabscheider einen BB-Gaseinlass zum Einleiten des BB-Gases, einen Luftauslass zum Auslassen der gereinigten Luft und einen Ölauslass zum Ablassen des abgeschiedenen Öls auf.

Der Elektromotor ist vorzugsweise direkt oder über ein Getriebe mit der Welle gekoppelt. Vorzugsweise ist die Ermittlungsvorrichtung außerhalb des Ölabscheiders angeordnet. Vorzugsweise weist die Ermittlungsvorrichtung mindestens einen Sensor auf. Weiter bevorzugt ist der mindestens eine Sensor fluidkommunizierend mit dem BB-Gaseinlass, insbesondere im Bereich einer BB-Gaszuleitung, angeordnet. Die Bestimmungsvorrichtung ist vorzugsweise außerhalb des Ölabscheiders, insbesondere in einem vor Umwelteinflüssen geschützten Gehäuse angeordnet. Es kann erfindungsgemäß vorgesehen sein, dass die Bestimmungsvorrichtung im Bereich der Motorsteuerungsvorrichtung oder als Teil der Motorsteuerungsvorrichtung ausgebildet ist. Die Steuerungsvorrichtung ist vorzugsweise außerhalb des Ölabscheiders, insbesondere in einem vor Umwelteinflüssen geschützten Gehäuse angeordnet. Es kann erfindungsgemäß vorgesehen sein, dass die Steuerungsvorrichtung im Bereich der Motorsteuerungsvorrichtung oder als Teil der Motorsteuerungsvorrichtung ausgebildet ist. Die Bestimmungsvorrichtung und die Steuerungsvorrichtung können erfindungsgemäß als separate Vorrichtungen oder als gemeinsame Vorrichtung ausgebildet sein.

Bei der beschriebenen Vorrichtung zum Abscheiden von Öl aus Abluft eines Kurbelgehäuses eines Kraftfahrzeugs mit Verbrennungsmotor ergeben sich sämtliche Vorteile, die bereits zu einem Verfahren zum Betreiben eines aktiven Ölabscheiders zum Abscheiden von Öl aus Abluft eines Kurbelgehäuses eines Kraftfahrzeugs mit einem Verbrennungsmotor gemäß dem ersten Aspekt der Erfindung beschrieben worden sind. Demnach hat die erfindungsgemäße Vorrichtung gegenüber herkömmlichen Vorrichtungen den Vorteil, dass mit einfachen Mitteln sowie auf eine kostengünstige Art und Weise ein effizienter sowie wirtschaftlicher Betrieb des Ölabscheiders gewährleistbar ist. Mit der erfindungsgemäßen Vorrichtung ist es leicht möglich, nur so viel Öl wie nötig abzuscheiden und dabei der Elektromotor zum Antreiben des Ölabscheiders möglichst sparsam zu betreiben. Hierdurch ist ein Energieverbrauch des Kraftfahrzeugs weiter reduzierbar, ohne dass eine Verschlechterung des Filterresultats des Ölabscheiders in Kauf genommen werden muss, sodass auch strenge gesetzliche Vorschriften weiterhin eingehalten werden.

Ein erfindungsgemäßes Verfahren zum Betreiben eines aktiven Ölabscheiders zum Abscheiden von Öl aus Abluft eines Kurbelgehäuses eines Kraftfahrzeugs mit einem Verbrennungsmotor sowie eine erfindungsgemäße Vorrichtung zum Abscheiden von Öl aus Abluft eines Kurbelgehäuses eines Kraftfahrzeugs mit Verbrennungsmotor werden nachfolgend anhand von Zeichnungen näher erläutert. Es zeigen jeweils schematisch:
- Figur 1: in einer schematischen Darstellung eine bevorzugte Ausführungsform einer erfindungsgemäßen Vorrichtung,
- Figur 2: in einer Schnittdarstellung und Seitenansicht eine bevorzugte Ausführungsform eines Ölabscheiders,
- Figur 3: einen Ausschnitt des Ölabscheiders aus Figur 2,
- Figur 4: in einer Schnittdarstellung und Draufsicht den Ölabscheider aus Figur 2,
- Figur 5: in einer schematischen Darstellung bevorzugte Aspekte des erfindungsgemäßen Verfahrens, und
- Figur 6: in einem Ablaufdiagramm eine bevorzugte Ausführungsform des erfindungsgemäßen Verfahrens.

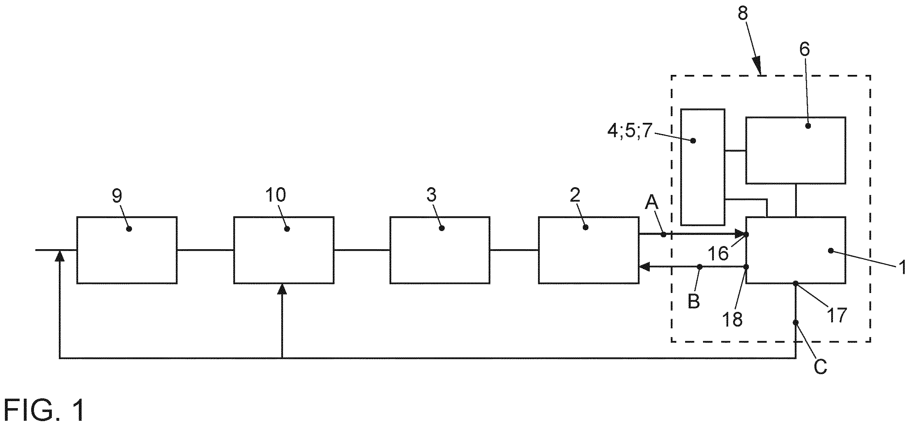

Elemente mit gleicher Funktion und Wirkungsweise sind in den Figuren 1 bis 6 jeweils mit denselben Bezugszeichen versehen.

In Fig. 1 ist eine bevorzugte Ausführungsform einer erfindungsgemäßen Vorrichtung 8 schematisch dargestellt. Die Vorrichtung 8 weist einen Ölabscheider 1 mit einem Lufteinlass 16 zur Aufnahme von Abluft A aus einem Kurbelgehäuse 2 eines Verbrennungsmotors 3, einem Ölauslass 18 zur Rückführung eines Ölstroms B aus der Abluft A abgeschiedenen Öls in das Kurbelgehäuse 2 sowie einem Luftauslass 17 zum Abführen gereinigter Luft C auf. Der Luftauslass 17 ist beispielsweise mit einem Abgas-Turbolader 9 und/oder einem Saugrohr 10 eines Ansaugtrakts des Verbrennungsmotors 3 fluidkommunizierend gekoppelt. Ferner weist die Vorrichtung 8 einen Elektromotor 6 zum Antreiben des Ölabscheiders 1 auf. Zudem weist die Vorrichtung 8 eine Ermittlungsvorrichtung 4, insbesondere zum Ermitteln eines Motorbetriebszustands des Verbrennungsmotors 3, eine Bestimmungsvorrichtung, insbesondere zum Bestimmen einer bevorzugten SOLL-Drehzahl SB, und eine Steuerungsvorrichtung 7 zum Steuern des Elektromotors 6 auf.

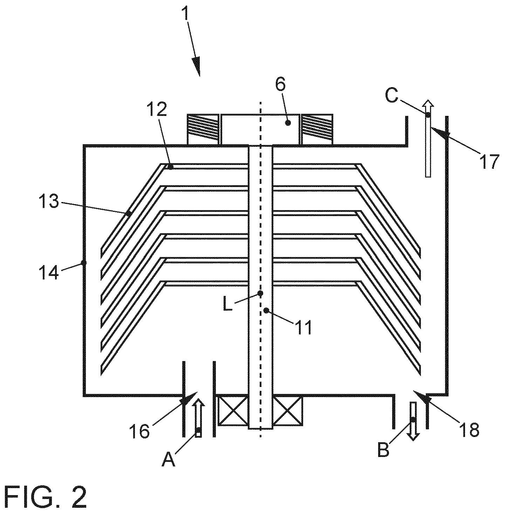

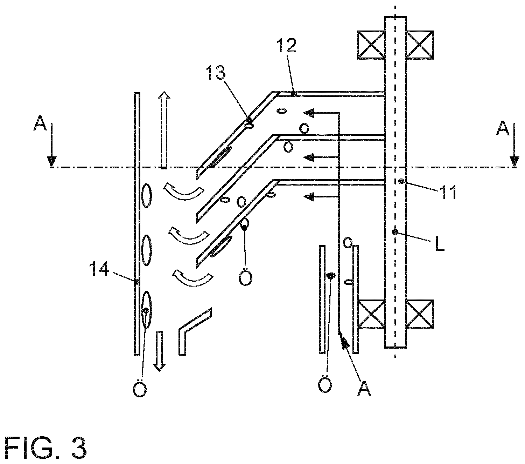

Fig. 2 zeigt eine bevorzugte Ausführungsform eines Ölabscheiders 1 der erfindungsgemäßen Vorrichtung 8 schematisch in einer Schnittdarstellung und Seitenansicht. In Fig. 3 ist ein Ausschnitt des Ölabscheiders 1 aus Fig. 2 schematisch in einer Seitenansicht dargestellt. Der Ölabscheider 1 weist eine zentrale Welle 11 mit einer Wellenlängsachse L auf, an welcher ein Tellerpaket mit einer Mehrzahl von Tellern 12 angeordnet ist. Die Welle 11 ist mittels des Elektromotors 6 in Rotation um die Wellenlängsachse L versetzbar. Die Teller 12 sind entlang der Wellenlängsachse L voneinander beabstandet angeordnet. Die Wellenlängsachse L verläuft durch die Massenschwerpunkte der Teller 12, um einen ruhigen Betrieb des Ölabscheiders 1 zu gewährleisten. Randbereiche 13 der Teller 12 sind nach unten gebogen, um ein Abscheiden der Öltropfen Ö aus der Abluft A zu verbessern. Zum Auffangen der Öltropfen Ö weist der Ölabscheider 1 eine Prallwand 14 auf. Die gereinigte Luft C ist über den Luftauslass 17 aus dem Ölabscheider 1 herausleitbar. Ein Ölstrom B ist über den Ölauslass 18 aus dem Ölabscheider 1 herausleitbar.

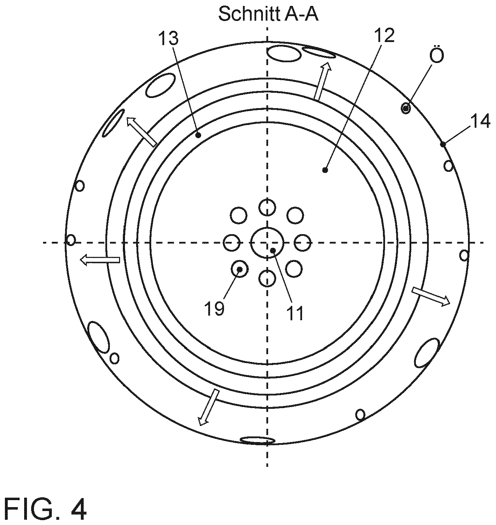

Fig. 4 zeigt den Ölabscheider 1 aus Fig. 2 schematisch in einer Schnittdarstellung und Draufsicht. In dieser Ansicht sind mehrere in den Tellern 12 ausgebildete Abluftdurchlässe 19 erkennbar, welche zum Durchlassen eines Teils der Abluft A ausgebildet sind. Auf diese Weise ist die Abluft A auf die einzelnen Teller 12 des Tellerpakets besser verteilbar.

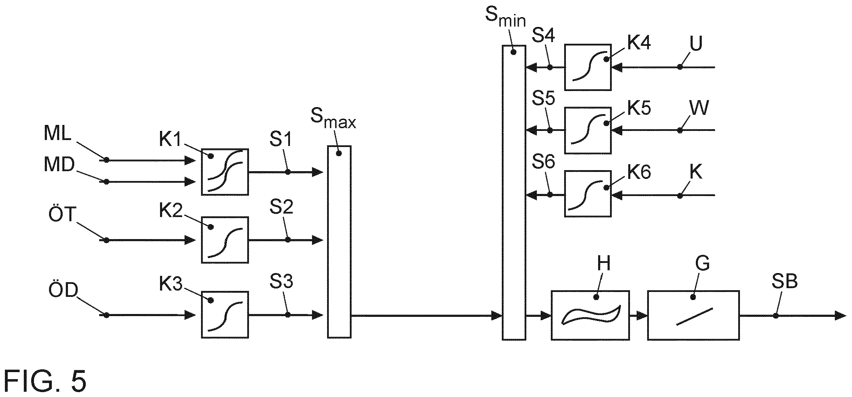

In Fig. 5 sind bevorzugte Aspekte des erfindungsgemäßen Verfahrens schematisch dargestellt. Wie aus der Abbildung ersichtlich, ist eine erste SOLL-Drehzahl S1 aus einer Motorlast ML und/oder einer Motordrehzahl MD in Verbindung mit einem ersten Kennfeld K1 ermittelbar. Eine zweite SOLL-Drehzahl S2 ist aus einer Öltemperatur ÖT und einem zweiten Kennfeld K2 ermittelbar. Eine dritte SOLL-Drehzahl S3 ist aus einem Öldruck ÖD und einem dritten Kennfeld K3 ermittelbar. Aus der ersten SOLL-Drehzahl S1, der zweiten SOLL-Drehzahl S2 und der dritten SOLL-Drehzahl S3 ist eine maximale SOLL-Drehzahl Sₘₐₓ ermittelbar. Eine vierte SOLL-Drehzahl S4 ist aus einer Bordnetzspannung U und einem vierten Kennfeld K4 ermittelbar. Eine fünfte SOLL-Drehzahl S5 ist aus einem Wassergehalt W des Öls und einem fünften Kennfeld K5 ermittelbar. Eine sechste SOLL-Drehzahl S6 ist aus einem Kraftstoffgehalt K des Öls und einem sechsten Kennfeld K6 ermittelbar. Aus der vierten SOLL-Drehzahl S4, der fünften SOLL-Drehzahl S5 und der sechsten SOLL-Drehzahl S6 ist eine minimale SOLL-Drehzahl Sₘᵢₙ ermittelbar. Aus der maximale SOLL-Drehzahl Sₘₐₓ und der minimalen SOLL-Drehzahl Sₘᵢₙ ist mittels einer Hysterese H und eine Gradientenbegrenzung G eine bevorzugte SOLL-Drehzahl SB zum Steuern des Elektromotors 6 ermittelbar.

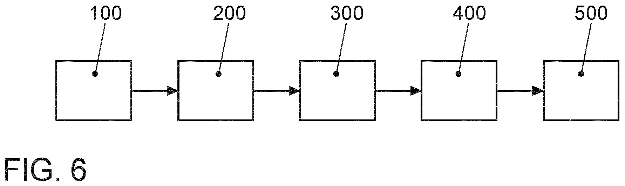

Fig. 6 zeigt eine bevorzugte Ausführungsform des erfindungsgemäßen Verfahrens schematisch in einem Ablaufdiagramm. In einem ersten Verfahrensschritt 100 wird ein Motorbetriebszustand des Verbrennungsmotors 3 mittels der Ermittlungsvorrichtung 4 ermittelt. Der Motorbetriebszustand ist durch eine Motorlast ML und/oder eine Motordrehzahl MD des Verbrennungsmotors 3 bestimmt. In einem zweiten Verfahrensschritt 200 wird mittels der Bestimmungsvorrichtung 5 die erste SOLL-Drehzahl S1 des Ölabscheiders 1 in Abhängigkeit des ermittelten Motorbetriebszustands und des ersten Kennfelds K1 bestimmt. Das erste Kennfeld K1 legt die erste SOLL-Drehzahl S1 des Ölabscheiders 1 in Abhängigkeit des Motorbetriebszustands fest. In einem dritten Verfahrensschritt 300 wird mittels der Bestimmungsvorrichtung 5 eine maximale SOLL-Drehzahl Sₘₐₓ des Ölabscheiders 1 in Abhängigkeit der ersten SOLL-Drehzahl derart ermittelt, dass die maximale SOLL-Drehzahl Sₘₐₓ mindestens so hoch wie die erste SOLL-Drehzahl S1 ist. In einem vierten Verfahrensschritt 400 wird mittels der Bestimmungsvorrichtung 5 die bevorzugte SOLL-Drehzahl SB auf Basis der maximalen SOLL-Drehzahl Sₘₐₓ derart bestimmt, dass die bevorzugte SOLL-Drehzahl SM höchstens so groß wie die maximale SOLL-Drehzahl Sₘₐₓ ist. In einem fünften Verfahrensschritt 500 wird der Elektromotor 6 zum Antreiben des Ölabscheiders 1 mittels der Steuerungsvorrichtung 7 mit der bevorzugten SOLL-Drehzahl SB gesteuert.

### Bezugszeichenliste

- 1: Ölabscheider
- 2: Kurbelgehäuse
- 3: Verbrennungsmotor
- 4: Ermittlungsvorrichtung
- 5: Bestimmungsvorrichtung
- 6: Elektromotor
- 7: Steuerungsvorrichtung
- 8: Vorrichtung
- 9: Abgas-Turbolader

- 10: Saugrohr
- 11: Welle
- 12: Teller
- 13: Randbereich
- 14: Prallwand
- 15: Lager
- 16: Lufteinlass
- 17: Luftauslass
- 18: Ölauslass
- 19: Abluftdurchlass

- 100: erster Verfahrensschritt
- 200: zweiter Verfahrensschritt
- 300: dritter Verfahrensschritt
- 400: vierter Verfahrensschritt
- 500: fünfter Verfahrensschritt

- A: Abluft
- B: Ölstrom
- C: gereinigte Luft
- G: Gradientenbegrenzung
- K: Kraftstoffgehalt
- K1: erstes Kennfeld
- K2: zweites Kennfeld
- K3: drittes Kennfeld
- K4: viertes Kennfeld
- K5: fünftes Kennfeld
- K6: sechstes Kennfeld
- L: Wellenlängsachse
- MD: Motordrehzahl
- ML: Motorlast
- Ö: Öltropfen
- ÖD: Öldruck
- ÖT: Öltemperatur
- S1: erste SOLL-Drehzahl
- S2: zweite SOLL-Drehzahl
- S3: dritte SOLL-Drehzahl
- S4: vierte SOLL-Drehzahl
- S5: fünfte SOLL-Drehzahl
- S6: sechste SOLL-Drehzahl
- SB: bevorzugte SOLL-Drehzahl
- Sₘₐₓ: maximale SOLL-Drehzahl
- Sₘᵢₙ: minimale SOLL-Drehzahl
- U: Bordnetzspannung
- W: Wassergehalt

## Patentansprüche

1. Verfahren zum Betreiben eines aktiven Ölabscheiders (1) zum Abscheiden von Öl aus Abluft eines Kurbelgehäuses (2) eines Kraftfahrzeugs mit einem Verbrennungsmotor (3), aufweisend die folgenden Schritte:
- Ermitteln eines Motorbetriebszustands des Verbrennungsmotors (3) mittels einer Ermittlungsvorrichtung (4), wobei der Motorbetriebszustand durch eine Motorlast (ML) und/oder eine Motordrehzahl (MD) des Verbrennungsmotors (3) bestimmt ist,
- Bestimmen einer ersten SOLL-Drehzahl (S1) des Ölabscheiders (1) in Abhängigkeit des ermittelten Motorbetriebszustands und eines ersten Kennfelds (K1) mittels einer Bestimmungsvorrichtung (5), wobei das erste Kennfeld (K1) die erste SOLL-Drehzahl (S1) des Ölabscheiders (1) in Abhängigkeit des Motorbetriebszustands festlegt,
- Bestimmen einer maximalen SOLL-Drehzahl (Sₘₐₓ) des Ölabscheiders (1) in Abhängigkeit der ersten SOLL-Drehzahl (S1) mittels der Bestimmungsvorrichtung (5) derart, dass die maximale SOLL-Drehzahl (Sₘₐₓ) mindestens so hoch wie die erste SOLL-Drehzahl (S1) ist,
- Bestimmen einer bevorzugten SOLL-Drehzahl (SB) auf Basis der maximalen SOLL-Drehzahl (Sₘₐₓ) mittels der Bestimmungsvorrichtung (5) derart, dass die bevorzugte SOLL-Drehzahl (SM) höchstens so groß wie die maximale SOLL-Drehzahl (Sₘₐₓ) ist, und
- Steuern eines Elektromotors (6) zum Antreiben des Ölabscheiders (1) mit der bevorzugten SOLL-Drehzahl (SB) mittels einer Steuerungsvorrichtung (7),
**gekennzeichnet dadurch, dass**
mittels der Ermittlungsvorrichtung (4) eine Öltemperatur (ÖT) des Verbrennungsmotors (3) ermittelt wird, wobei eine zweite SOLL-Drehzahl (S2) des Ölabscheiders (1) in Abhängigkeit der ermittelten Öltemperatur (ÖT) und eines zweiten Kennfelds (K2) mittels der Bestimmungsvorrichtung (5) bestimmt wird, wobei das zweite Kennfeld (K2) die zweite SOLL-Drehzahl (S2) des Ölabscheiders (1) in Abhängigkeit der Öltemperatur (ÖT) festlegt, wobei das Bestimmen der maximalen SOLL-Drehzahl (Sₘₐₓ) des Ölabscheiders (1) mittels der Bestimmungsvorrichtung (5) zusätzlich in Abhängigkeit der zweiten SOLL-Drehzahl (S2) derart erfolgt, dass die maximale SOLL-Drehzahl (Sₘₐₓ) mindestens so hoch wie die zweite SOLL-Drehzahl (S2) ist.

2. Verfahren nach Anspruch 1,
**dadurch gekennzeichnet,**
**dass** der Motorbetriebszustand mittels der Ermittlungsvorrichtung (4) von einem Motorsteuerungsgerät zum Steuern des Verbrennungsmotors (3) ermittelt wird.

3. Verfahren nach Anspruch 1 oder 2,
**dadurch gekennzeichnet,**
**dass** mittels der Ermittlungsvorrichtung (4) ein Öldruck (ÖD) des Verbrennungsmotors (3) ermittelt wird, wobei eine dritte SOLL-Drehzahl (S3) des Ölabscheiders (1) in Abhängigkeit des ermittelten Öldrucks (ÖD) und eines dritten Kennfelds (K3) mittels der Bestimmungsvorrichtung (5) bestimmt wird, wobei das dritte Kennfeld (K3) die dritte SOLL-Drehzahl (S3) des Ölabscheiders (1) in Abhängigkeit des Öldrucks (ÖD) festlegt, wobei das Bestimmen der maximalen SOLL-Drehzahl (Sₘₐₓ) des Ölabscheiders (1) mittels der Bestimmungsvorrichtung (5) zusätzlich in Abhängigkeit der dritten SOLL-Drehzahl (S3) derart erfolgt, dass die maximale SOLL-Drehzahl (Sₘₐₓ) mindestens so hoch wie die dritte SOLL-Drehzahl (S3) ist.

4. Verfahren nach einem der vorangegangenen Ansprüche,
**dadurch gekennzeichnet,**
**dass** mittels der Ermittlungsvorrichtung (4) eine Bordnetzspannung (U) eines Bordnetzes zum Betreiben des Elektromotors (6) ermittelt wird, wobei eine vierte SOLL-Drehzahl (S4) des Ölabscheiders (1) in Abhängigkeit der ermittelten Bordnetzspannung (U) und eines vierten Kennfelds (K4) mittels der Bestimmungsvorrichtung (5) bestimmt wird, wobei das vierte Kennfeld (K4) die vierte SOLL-Drehzahl (S4) des Ölabscheiders (1) in Abhängigkeit der Bordnetzspannung (U) festlegt, wobei mittels der Bestimmungsvorrichtung (5) eine minimale SOLL-Drehzahl (Sₘᵢₙ) in Abhängigkeit der vierten SOLL-Drehzahl (S4) derart bestimmt wird, dass die minimale SOLL-Drehzahl (Sₘᵢₙ) maximal so groß wie die vierte SOLL-Drehzahl (S4) ist, wobei das Bestimmen der bevorzugten SOLL-Drehzahl (SB) des Ölabscheiders (1) mittels der Bestimmungsvorrichtung (5) zusätzlich in Abhängigkeit der minimalen SOLL-Drehzahl (Sₘᵢₙ) derart erfolgt, dass die bevorzugte SOLL-Drehzahl (SB) höchstens so hoch wie die minimale SOLL-Drehzahl (Sₘᵢₙ) ist.

5. Verfahren nach Anspruch 4,
**dadurch gekennzeichnet,**
**dass** mittels der Ermittlungsvorrichtung (4) ein Wassergehalt (W) im Öl ermittelt wird, wobei eine fünfte SOLL-Drehzahl (S5) des Ölabscheiders (1) in Abhängigkeit des ermittelten Wassergehalts (W) und eines fünften Kennfelds (K5) mittels der Bestimmungsvorrichtung (5) bestimmt wird, wobei das fünfte Kennfeld (K5) die fünfte SOLL-Drehzahl (S5) des Ölabscheiders (1) in Abhängigkeit des Wassergehalts (W) festlegt, wobei mittels der Bestimmungsvorrichtung (5) die minimale SOLL-Drehzahl (Sₘᵢₙ) zusätzlich in Abhängigkeit der fünften SOLL-Drehzahl (S5) derart bestimmt wird, dass die minimale SOLL-Drehzahl (Sₘᵢₙ) maximal so groß wie die fünfte SOLL-Drehzahl (S5) ist.

6. Verfahren nach Anspruch 4 oder 5,
**dadurch gekennzeichnet,**
**dass** mittels der Ermittlungsvorrichtung (4) ein Kraftstoffgehalt (K) im Öl ermittelt wird, wobei eine sechste SOLL-Drehzahl (S6) des Ölabscheiders (1) in Abhängigkeit des ermittelten Wassergehalts (W) und eines sechsten Kennfelds (K6) mittels der Bestimmungsvorrichtung (5) bestimmt wird, wobei das sechste Kennfeld (K6) die sechste SOLL-Drehzahl (S6) des Ölabscheiders (1) in Abhängigkeit des Kraftstoffgehalts (K) festlegt, wobei mittels der Bestimmungsvorrichtung (5) die minimale SOLL-Drehzahl (Sₘᵢₙ) zusätzlich in Abhängigkeit der sechsten SOLL-Drehzahl (S6) derart bestimmt wird, dass die minimale SOLL-Drehzahl (Sₘᵢₙ) maximal so groß wie die sechste SOLL-Drehzahl (S6) ist.

7. Verfahren nach einem der vorangegangenen Ansprüche,
**dadurch gekennzeichnet,**
**dass** das Verfahren wiederholt durchgeführt wird, wobei die bevorzugte SOLL-Drehzahl (SB) mittels eine Hysterese (H) nur dann verändert wird, wenn die Veränderung eine durch die Hysterese (H) festgelegte Mindestveränderung übersteigt.

8. Verfahren nach Anspruch 7,
**dadurch gekennzeichnet,**
**dass** das Steuern des Elektromotors (6) zum Antreiben des Ölabscheiders (1) mit der bevorzugten SOLL-Drehzahl (SB) mittels der Steuerungsvorrichtung (7) mit einem begrenzten Gradienten (G) derart erfolgt, dass eine Stromstärke zum Betreiben des Elektromotors (6) einen vordefinierten Stromstärkengrenzwert nicht übersteigt.

9. Vorrichtung (8) zum Abscheiden von Öl aus Abluft eines Kurbelgehäuses (2) eines Kraftfahrzeugs mit Verbrennungsmotor (3), aufweisend einen aktiven Ölabscheider (1) mit einem Elektromotor (6) zum Antreiben des aktiven Ölabscheiders (1), eine Ermittlungsvorrichtung (4) zum Ermitteln von Betriebsparametern des Kraftfahrzeugs, eine Bestimmungsvorrichtung (5) zum Bestimmen von SOLL-Drehzahlen (S1, S2, S3, S4, S5, S6, Sₘₐₓ, Sₘᵢₙ, SB) des Elektromotors (6) in Abhängigkeit mindestens eines Betriebsparameters (MD, ML) und mindestens eines Kennfelds (K1, K2, K3, K4, K5, K6) sowie eine Steuerungsvorrichtung (7) zum Steuern des Elektromotors (6) in Abhängigkeit einer bevorzugten SOLL-Drehzahl (SB),
**dadurch gekennzeichnet,**
**dass** die Vorrichtung (8) zur Durchführung eines Verfahrens nach einem der Ansprüche 1 bis 8 ausgebildet ist.

## Claims

1. Method for operating an active oil separator (1) for separating oil from exhaust air of a crankcase (2) of a motor vehicle having an internal combustion engine (3), comprising the following steps:
- identifying an engine operating state of the internal combustion engine (3) by means of an identification device (4), the engine operating state being determined by an engine load (ML) and/or an engine speed (MD) of the internal combustion engine (3),
- determining a first TARGET speed (S1) of the oil separator (1) on the basis of the identified engine operating state and a first characteristic map (K1) by means of a determination device (5), the first characteristic map (K1) defining the first TARGET speed (S1) of the oil separator (1) on the basis of the engine operating state,
- determining a maximum TARGET speed (Sₘₐₓ) of the oil separator (1) on the basis of the first TARGET speed (S1) by means of the determination device (5) such that the maximum TARGET speed (Sₘₐₓ) is at least as high as the first TARGET speed (S1),
- determining a preferred TARGET speed (SB) based on the maximum TARGET speed (Sₘₐₓ) by means of the determination device (5) such that the preferred TARGET speed (SM) is at most as great as the maximum TARGET speed (Sₘₐₓ), and
- controlling an electric motor (6) for driving the oil separator (1) with the preferred TARGET speed (SB) by means of a control device (7),
**characterized in that**
an oil temperature (OT) of the internal combustion engine (3) is identified by means of the identification device (4), a second TARGET speed (S2) of the oil separator (1) being identified on the basis of the identified oil temperature (OT) and a second characteristic map (K2) being determined by means of the determination device (5), the second characteristic map (K2) defining the second TARGET speed (S2) of the oil separator (1) on the basis of the oil temperature (OT), the maximum TARGET speed (Sₘₐₓ) of the oil separator (1) being determined by means of the determination device (5) additionally on the basis of the second TARGET speed (S2) such that the maximum TARGET speed (Sₘₐₓ) is at least as high as the second TARGET speed (S2).

2. Method according to claim 1,
**characterized in**
**that** the engine operating state is identified by means of the identification device (4) by an engine control device for controlling the internal combustion engine (3).

3. Method according to either claim 1 or claim 2,
**characterized in**
**that** an oil pressure (OD) of the internal combustion engine (3) is identified by means of the identification device (4), a third TARGET speed (S3) of the oil separator (1) being determined on the basis of the determined oil pressure (OD) and a third characteristic map (K3) being determined by means of the determination device (5), the third characteristic map (K3) defining the third TARGET speed (S3) of the oil separator (1) on the basis of the oil pressure (OD), the maximum TARGET speed (Sₘₐₓ) of the oil separator (1) being determined by means of the determination device (5) additionally on the basis of the third TARGET speed (S3) such that the maximum TARGET speed (Sₘₐₓ) is at least as high as the third TARGET speed (S3).

4. Method according to any of the preceding claims,
**characterized in**
**that** an on-board electrical system voltage (U) of an on-board electrical system for operating the electric motor (6) is identified by means of the identification device (4), a fourth TARGET speed (S4) of the oil separator (1) being identified on the basis of the identified on-board electrical system voltage (U) and a fourth characteristic map (K4) being determined by means of the determination device (5), the fourth characteristic map (K4) defining the fourth TARGET speed (S4) of the oil separator (1) on the basis of the on-board electrical system voltage (U), a minimum TARGET speed (Sₘᵢₙ) being determined on the basis of the fourth TARGET speed (S4) by means of the determination device (5), such that the minimum TARGET speed (Sₘᵢₙ) is at most as great as the fourth TARGET speed (S4), the preferred TARGET speed (SB) of the oil separator (1) being determined by means of the determination device (5) additionally on the basis of the minimum TARGET speed (Sₘᵢₙ) such that the preferred TARGET speed (SB) is at most as high as the minimum TARGET speed (Sₘᵢₙ).

5. Method according to claim 4,
**characterized in**
**that** a water content (W) in the oil is identified by means of the identification device (4),
a fifth TARGET speed (S5) of the oil separator (1) being determined on the basis of the identified water content (W) and a fifth characteristic map (K5) being determined by means of the determination device (5), the fifth characteristic map (K5) defining the fifth TARGET speed (S5) of the oil separator (1) on the basis of the water content (W), the minimum TARGET speed (Sₘᵢₙ) being determined by means of the determination device (5) additionally on the basis of the fifth TARGET speed (S5) such that the minimum TARGET speed (Sₘᵢₙ) is at most as great as the fifth TARGET speed (S5).

6. Method according to either claim 4 or claim 5,
**characterized in**
**that** a fuel content (K) in the oil is identified by means of the identification device (4), a sixth TARGET speed (S6) of the oil separator (1) being determined on the basis of the identified water content (W) and a sixth characteristic map (K6) being determined by means of the determination device (5), the sixth characteristic map (K6) defining the sixth TARGET speed (S6) of the oil separator (1) on the basis of the fuel content (K), the minimum TARGET speed (Sₘᵢₙ) being determined by means of the determination device (5) additionally on the basis of the sixth TARGET speed (S6) such that the minimum TARGET speed (Sₘᵢₙ) is at most as great as the sixth TARGET speed (S6).

7. Method according to any of the preceding claims,
**characterized in**
**that** the method is repeatedly carried out, the preferred TARGET speed (SB) being changed by means of a hysteresis (H) only when the change exceeds a minimum change defined by the hysteresis (H).

8. Method according to claim 7,
**characterized in**
**that** the electric motor (6) for driving the oil separator (1) with the preferred TARGET speed (SB) is controlled by means of the control device (7) with a limited gradient (G) such that a current intensity for operating the electric motor (6) does not exceed a predefined current strength limit value.

9. Device (8) for separating oil from exhaust air of a crankcase (2) of a motor vehicle having an internal combustion engine (3), comprising an active oil separator (1) having an electric motor (6) for driving the active oil separator (1), an identification device (4) for identifying operating parameters of the motor vehicle, a determination device (5) for determining TARGET speeds (S1, S2, S3, S4, S5, S6, Sₘₐₓ, Sₘᵢₙ, SB) of the electric motor (6) on the basis of at least one operating parameter (MD, ML) and at least one characteristic map (K1, K2, K3, K4, K5, K6) and a control device (7) for controlling the electric motor (6) on the basis of a preferred TARGET speed (SB),
**characterized in**
**that** the device (8) is designed to carry out a method according to any of claims 1 to 8.

## Revendications

1. Procédé pour faire fonctionner un séparateur d'huile (1) actif pour la séparation de l'huile à partir d'une évacuation d'air d'un carter de vilebrequin (2) d'un véhicule automobile comportant un moteur à combustion interne (3), présentant les étapes suivantes :
- détermination d'un état de fonctionnement de moteur du moteur à combustion interne (3) au moyen d'un dispositif de détermination (4), dans lequel l'état de fonctionnement de moteur est établi par le biais d'une charge de moteur (ML) et/ou d'un régime de moteur (MD) du moteur à combustion interne (3),
- établissement d'un premier régime de consigne (S1) du séparateur d'huile (1) en fonction de l'état de fonctionnement de moteur déterminé et d'un premier champ caractéristique (K1) au moyen d'un dispositif d'établissement (5), dans lequel le premier champ caractéristique (K1) fixe le premier régime de consigne (S1) du séparateur d'huile (1) en fonction de l'état de fonctionnement de moteur,
- établissement d'un régime de consigne maximal (Sₘₐₓ) du séparateur d'huile (1) en fonction du premier régime de consigne (S1) au moyen du dispositif d'établissement (5) de sorte que le régime de consigne maximal (Sₘₐₓ) est au moins aussi élevé que le premier régime de consigne (S1),
- établissement d'un régime de consigne préféré (SB) sur la base du régime de consigne maximal (Sₘₐₓ) au moyen du dispositif d'établissement (5) de sorte que le régime de consigne préféré (SM) est au plus aussi élevé que le régime de consigne maximal (Sₘₐₓ), et
- commande d'un moteur électrique (6) pour l'entraînement du séparateur d'huile (1) avec le régime de consigne préféré (SB) au moyen d'un dispositif de commande (7),
**caractérisé en ce que**
au moyen du dispositif de détermination (4), une température d'huile (ÖT) du
moteur à combustion interne (3) est déterminée, dans lequel un deuxième régime de consigne (S2) du séparateur d'huile (1) est établi en fonction de la température d'huile (ÖT) déterminée et d'un deuxième champ caractéristique (K2) au moyen du dispositif d'établissement (5), dans lequel le deuxième champ caractéristique (K2) fixe le deuxième régime de consigne (S2) du séparateur d'huile (1) en fonction de la température d'huile (ÖT), dans lequel l'établissement du régime de consigne maximal (Sₘₐₓ) du séparateur d'huile (1) est effectué au moyen du dispositif d'établissement (5) en outre en fonction du deuxième régime de consigne (S2), de sorte que le régime de consigne maximal (Sₘₐₓ) est au moins aussi élevé que le deuxième régime de consigne (S2).

2. Procédé selon la revendication 1,
**caractérisé en ce**
**que** l'état de fonctionnement de moteur est déterminé au moyen du dispositif de détermination (4) par un appareil de commande de moteur pour la commande du moteur à combustion interne (3).

3. Procédé selon la revendication 1 ou 2,
**caractérisé en ce**
**que,** au moyen du dispositif de détermination (4), une pression d'huile (ÖD) du moteur à combustion interne (3) est déterminée, dans lequel un troisième régime de consigne (S3) du séparateur d'huile (1) est établi en fonction de la pression d'huile (ÖD) déterminée et d'un troisième champ caractéristique (K3) au moyen du dispositif d'établissement (5), dans lequel le troisième champ caractéristique (K3) fixe le troisième régime de consigne (S3) du séparateur d'huile (1) en fonction de la pression d'huile (ÖD), dans lequel l'établissement du régime de consigne maximal (Sₘₐₓ) du séparateur d'huile (1) est effectué au moyen du dispositif d'établissement (5) en outre en fonction du troisième régime de consigne (S3), de sorte que le régime de consigne maximal (Sₘₐₓ) est au moins aussi élevé que le troisième régime de consigne (S3).

4. Procédé selon l'une quelconque des revendications précédentes,
**caractérisé en ce**
**que,** au moyen du dispositif de détermination (4), une tension de réseau embarqué (U) d'un réseau embarqué pour le fonctionnement du moteur électrique (6) est déterminée, dans lequel un quatrième régime de consigne (S4) du séparateur d'huile (1) est établi en fonction de la tension de réseau embarqué (U) déterminée et d'un quatrième champ caractéristique (K4) au moyen du dispositif d'établissement (5), dans lequel le quatrième champ caractéristique (K4) fixe le quatrième régime de consigne (S4) du séparateur d'huile (1) en fonction de la tension de réseau embarqué (U), dans lequel au moyen du dispositif d'établissement (5), un régime de consigne minimal (Sₘᵢₙ) est établi en fonction du quatrième régime de consigne (S4) de telle sorte que le régime de consigne minimal (Sₘᵢₙ) est au maximum aussi élevé que le quatrième régime de consigne (S4), dans lequel l'établissement du régime de consigne préféré (SB) du séparateur d'huile (1) est effectué au moyen du dispositif d'établissement (5) en outre en fonction du régime de consigne minimal (Sₘᵢₙ) de sorte que le régime de consigne préféré (SB) est au plus aussi élevé que le régime de consigne minimal (Sₘᵢₙ).

5. Procédé selon la revendication 4,
**caractérisé en ce**
**que,** au moyen du dispositif de détermination (4), une teneur en eau (W) dans l'huile est déterminée,
dans lequel un cinquième régime de consigne (S5) du séparateur d'huile (1) est établi en fonction de
la teneur en eau (W) déterminée et d'un cinquième champ caractéristique (K5) au moyen du
dispositif d'établissement (5), dans lequel le cinquième champ caractéristique (K5) fixe le cinquième régime de consigne (S5) du séparateur d'huile (1) en fonction de la teneur en eau (W), dans lequel au moyen du dispositif d'établissement (5), le régime de consigne minimal (Sₘᵢₙ) est établi en outre en fonction du cinquième régime de consigne (S5) de telle sorte que le régime de consigne minimal (Sₘᵢₙ) est au maximum aussi élevé que le cinquième régime de consigne (S5).

6. Procédé selon la revendication 4 ou 5,
**caractérisé en ce**
**que,** au moyen du dispositif de détermination (4), une teneur en carburant (K) dans l'huile est déterminée, dans lequel un sixième régime de consigne (S6) du séparateur d'huile (1) est établi en fonction de la teneur en eau (W) déterminée et d'un sixième champ caractéristique (K6) au moyen du dispositif d'établissement (5), dans lequel le sixième champ caractéristique (K6) fixe le sixième régime de consigne (S6) du séparateur d'huile (1) en fonction de la
teneur en carburant (K), dans lequel au moyen du dispositif d'établissement (5), le régime de consigne minimal (Sₘᵢₙ) est établi en outre en fonction du sixième régime de consigne (S6) de telle sorte que le régime de consigne minimal (Sₘᵢₙ) est au maximum aussi élevé que le sixième régime de consigne (S6).

7. Procédé selon l'une quelconque des revendications précédentes,
**caractérisé en ce**
**que** le procédé est réalisé de manière répétée, dans lequel le régime de consigne préféré
(SB) n'est modifié au moyen d'une hystérésis (H) que lorsque la modification dépasse une modification minimale fixée par l'hystérésis (H).

8. Procédé selon la revendication 7,
**caractérisé en ce**
**que** la commande du moteur électrique (6) pour l'entraînement du séparateur d'huile (1) est effectuée avec le régime de consigne préféré (SB) au moyen du dispositif de commande (7) avec un gradient limité (G) de telle sorte qu'une intensité de courant pour faire fonctionner le moteur électrique (6) ne dépasse pas une valeur limite d'intensité de courant prédéfinie.

9. Dispositif (8) pour la séparation de l'huile à partir d'évacuation d'air d'un carter de manivelle (2) d'un véhicule automobile comportant un moteur à combustion interne (3), présentant un séparateur d'huile (1) actif comportant un moteur électrique (6) pour l'entraînement du séparateur d'huile (1) actif, un dispositif de détermination (4) pour la détermination de paramètres de fonctionnement du véhicule automobile, un dispositif d'établissement (5) pour l'établissement de régimes de consigne (S1, S2, S3, S4, S5, S6, Sₘₐₓ, Sₘᵢₙ, SB) du moteur électrique (6) en fonction d'au moins un paramètre de fonctionnement (MD, ML) et d'au moins un champ caractéristique (K1, K2, K3, K4, K5, K6), ainsi qu'un dispositif de commande (7) pour la commande du moteur électrique (6) en fonction d'un régime de consigne préféré (SB),
**caractérisé en ce**
**que** le dispositif (8) est conçu pour l'exécution d'un procédé selon l'une des revendications 1 à 8.
